(19) **Europäisches Patentamt**
**European Patent Office**
**Office européen des brevets**

(11) **EP 4 757 334 A1**

(12) **EUROPEAN PATENT APPLICATION**
published in accordance with Art. 153(4) EPC

(43) Date of publication:
**10.06.2026 Bulletin 2026/24**

(21) Application number: **24860226.0**

(22) Date of filing: **05.08.2024**

(51) International Patent Classification (IPC):
$H04N\ 23/73^{(2023.01)}$      $H04N\ 23/61^{(2023.01)}$
$H04N\ 23/63^{(2023.01)}$      $H04N\ 23/84^{(2023.01)}$
$H04N\ 5/14^{(2006.01)}$

(52) Cooperative Patent Classification (CPC):
**H04N 5/14; H04N 23/61; H04N 23/63; H04N 23/73;**
**H04N 23/84**

(86) International application number:
**PCT/KR2024/011471**

(87) International publication number:
**WO 2025/048305 (06.03.2025 Gazette 2025/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **25.08.2023 KR 20230111980**
            **14.11.2023 KR 20230157729**

(71) Applicant: **Samsung Electronics Co., Ltd.**
**Suwon-si, Gyeonggi-do 16677 (KR)**

(72) Inventors:
• **LEE, Minyoung**
**Suwon-si, Gyeonggi-do 16677 (KR)**
• **BAEK, Sugon**
**Suwon-si, Gyeonggi-do 16677 (KR)**
• **KIM, Bosung**
**Suwon-si, Gyeonggi-do 16677 (KR)**
• **KIM, Jihyun**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD FOR CAPTURING IMAGE INCLUDING ANIMAL, AND ELECTRONIC DEVICE THEREFOR**

(57)     An electronic device according to one embodiment disclosed in the present document may comprise a camera, a display, a processor and a memory in which instructions are stored. When the instructions are executed, the processor can be configured to: identify the movement of an animal included in a preview image acquired using the camera while the preview image is displayed on the display; acquire an image captured on the basis of a first exposure value through the camera if the size of the identified movement is greater than a threshold value; and acquire an image captured on the basis of a second exposure value that is greater than the first exposure value through the camera if the size of the identified movement is less than the threshold value. Other various embodiments identified through the present document are possible.

FIG.3

EP 4 757 334 A1

# EP 4 757 334 A1

## Description

[Technical Field]

The disclosure relates to a method for capturing an image including an animal and an electronic device therefor.

[Background Art]

As the carrying of portable electronic devices has become commonplace in daily life, the use of camera functions in the portable electronic devices has significantly increased, and image capture using a portable electronic device is considered to be an indispensable function, so that the camera function has become a criterion for selecting a portable electronic device. Recently, as the number of people who raise companion animals has significantly increased, there has been a growing demand for functions related to capturing images of animals. For example, when a subject to be photographed, is recognized as an animal, an electronic device may acquire an image optimized for the animal by reducing the shutter speed of a camera to minimize motion blur or by changing a configuration such as sharpness or color to better represent the animal's characteristics.

The above information may be provided as related art for the purpose of facilitating an understanding of the disclosure. No admission or determination is made as to whether any of the above information can be applied as prior art related to the disclosure.

[Disclosure of Invention]

[Solution to Problem]

An electronic device according to an embodiment of the disclosure may include a camera, a display, a processor, and a memory configured to store instructions. The processor may be configured to, when the instructions are executed, identify, while the preview image is displayed on the display, movement of an animal included in a preview image acquired using the camera. The processor may be configured to, when the instructions are executed, in case that the identified movement has a magnitude greater than a threshold value, acquire, via the camera, an image captured based on a first exposure value. The processor may be configured to, when the instructions are executed, in case that the identified movement has a magnitude less than the threshold value, acquire, via the camera, an image captured based on a second exposure value greater than the first exposure value.

A method for operating an electronic device, according to an embodiment of the disclosure, may include identifying, while the preview image is displayed on a display, movement of an animal included in a preview image acquired using a camera. The method for operating the electronic device may include, in case that the identified movement has a magnitude greater than a threshold value, acquiring, via the camera, an image captured based on a first exposure value. The method for operating the electronic device may include, in case that the identified movement has a magnitude less than the threshold value, acquiring, via the camera, an image captured based on a second exposure value greater than the first exposure value.

A computer-readable recording medium according to an embodiment of the disclosure may include programs executable in a computer. The programs may perform identifying, while the preview image is displayed on a display, movement of an animal included in a preview image acquired using a camera. The programs may perform acquiring, via the camera, an image captured based on a first exposure value, in case that the identified movement has a magnitude greater than a threshold value. The programs may perform acquiring, via camera, an image captured based on a second exposure value greater than the first exposure value, in case that the identified movement has a magnitude less than the threshold value.

[Brief Description of Drawings]

FIG. 1 is a block diagram of an electronic device in a network environment according to an embodiment.
FIG. 2 is a block diagram illustrating a camera module according to various embodiments.
FIG. 3 is a diagram illustrating a configuration of an electronic device according to an embodiment.
FIG. 4 is a diagram illustrating a method for determining movement of an animal's forelimb or hind limb when capturing an image of the animal according to an embodiment.
FIG. 5 is a diagram illustrating a method for calculating a speed according to an animal's movement according to an embodiment.

FIG. 6 is a diagram illustrating a method for determining movement of an animal's head or torso when capturing an image of the animal according to an embodiment.

FIG. 7 is a flowchart illustrating a method by which an electronic device captures an image by considering the movement of an animal according to an embodiment.

FIG. 8 is a flowchart illustrating a method for operating an electronic device according to an embodiment.

With regard to the description of the drawings, the same or like reference numerals may be used to designate the same or like elements.

[Mode for the Invention]

Hereinafter, various embodiments set forth herein will be described with reference to the accompanying drawings. This is not intended to limit various embodiments of the disclosure to any specific form, and it should be understood that various modifications, equivalents, and/or alternatives are included in the disclosure.

As image capture targeting animals increases, various methods for acquiring optimized animal images have been attempted. In an electronic device such as a smartphone, an artificial intelligence (AI)-based image recognition technology may be used to recognize an animal from a preview image while capturing an image. In general, when an animal is recognized while capturing an image, the electronic device may configure shooting parameters to reduce the shutter speed or to emphasize sharpness or color. The electronic device may uniformly configure or change the shooting parameter whenever the animal is recognized, regardless of the animal's behavioral characteristics or movements. For example, among various types of animals, a dog is constantly moving, while a cat does not move as much as a dog, but such behavioral characteristics or movements of the animals may not be considered when capturing images of the animals. Accordingly, an image with noise boosting and/or excessive sharpness or color unsuitable for a scene may be acquired, thereby causing in inconvenience to a user intending to capture an image of an animal.

In various embodiments herein, when capturing an image of an animal, a movement of an animal recognized from a preview image may be detected, and a speed of the movement-detected animal may be estimated to configure a shooting parameter, thereby providing various embodiments for acquiring an image of an optimized scene for the animal.

The technical tasks to be achieved herein are not limited to the above-mentioned technical tasks, and other technical tasks not mentioned above may be clearly understood by those skilled in the art to which the disclosure pertains.

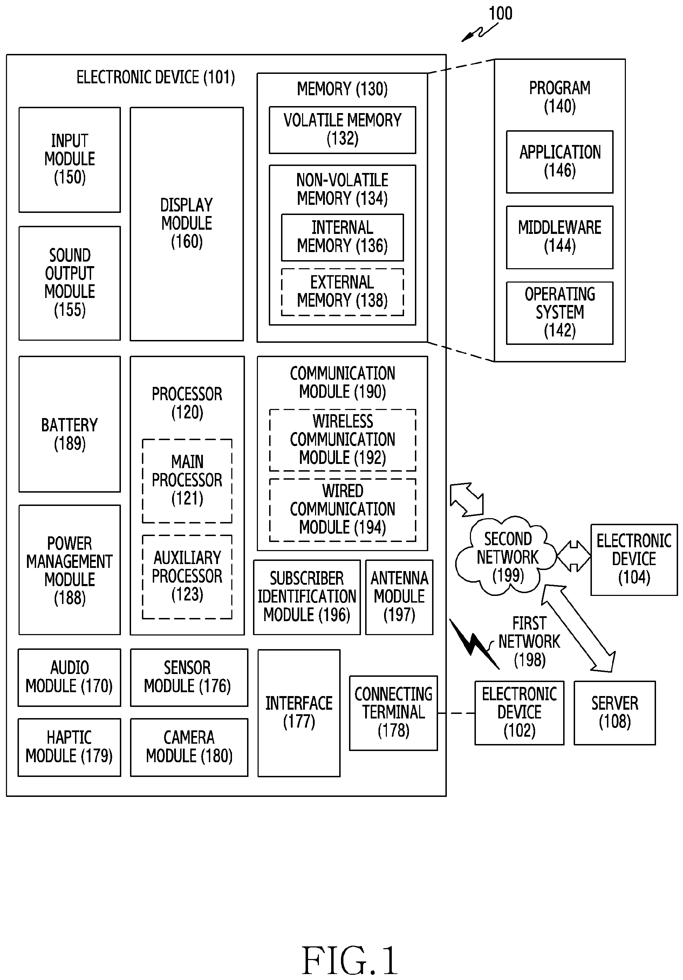

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

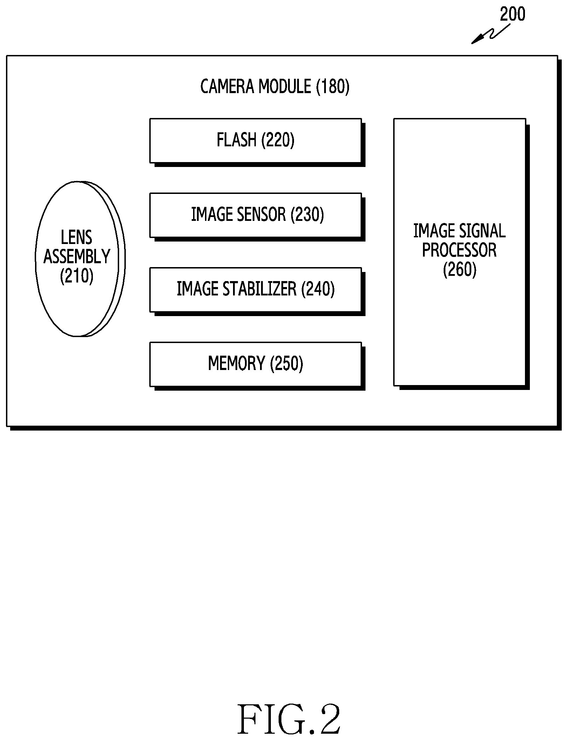

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

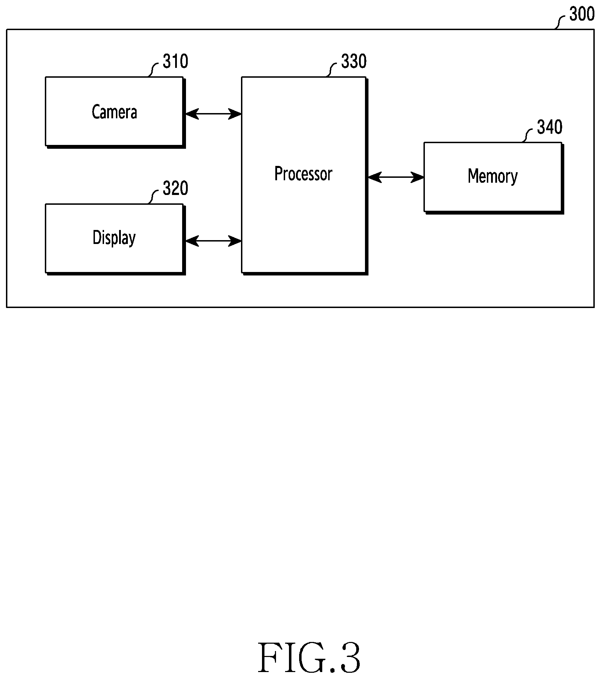

FIG. 3 is a diagram illustrating a configuration of an electronic device 300 according to an embodiment.

Referring to FIG. 3, the electronic device 300 may be a device which, when capturing an image of a subject (or an object) including an animal, determines movement of the subject from a preview image acquired via a camera, and configures shooting parameters in consideration of the determined subject movement. The electronic device 300 may include at least one camera 310, a display 320, at least one processor 330, and a memory 340. In FIG. 3, the electronic device 300 may correspond to the electronic device 101 illustrated in FIG. 1.

In an embodiment, the at least one camera 310 (e.g., the camera module 180 in FIG. 1) may capture an image of a subject according to a user's manipulation. For example, when a camera application is executed, the at least one camera 310 may acquire a preview image including the subject in units of frames and, when a user input (e.g., a shutter button input) for capturing an image is received while the preview image is displayed, an image including the subject may be captured. According to various embodiments, the at least one camera 310 may configure shooting parameters (e.g., a shutter speed, sharpness, and/or color correction) in consideration of the subject's movement, and may capture an image, based on the configured one or more shooting parameters.

In an embodiment, the display 320 (e.g., the display module 160 in FIG. 1) may display an image captured by using the at least one camera 310. For example, when a camera application is executed, the display 320 may display the acquired preview image from the at least one camera 310.

In an embodiment, the display 320 may be configured as at least one of a liquid crystal display (LCD), a thin film transistor LCD (TFT-LCD), an organic light-emitting diodes (OLED), a light-emitting diode (LED), an active-matrix organic LED (AMOLED), a flexible display, and a 3-dimensional display. In addition, some of these displays may be configured as transparent or light-transmitting types to allow the outside to be viewed therethrough. This may be configured as a transparent display type including a transparent OLED (TOLED).

In an embodiment, the memory 340 (e.g., the memory 130 in FIG. 1) may store instructions which, when executed, control the at least one processor 330 (e.g., the processor 120 in FIG. 1) to perform various operations. For example, when capturing an image of an animal, the at least one processor 330 may perform operations for configuring shooting parameters by estimating the animal's movement and the speed thereof.

In an embodiment, when a camera application is executed, the at least one processor 330 may display a preview image acquired by the camera 310 on the display 320. The processor 330 may detect at least one object included in the preview image while the preview image is displayed. For example, the at least one object may include an animal. According to various embodiments, the at least one processor 330 may, while providing the preview image, identify in real time, using AI-based image recognition technology, whether an animal is included in an object entering the preview image.

In an embodiment, when an animal is detected from the preview image, the at least one processor 330 may acquire first information for identifying a body part of the animal and second information for determining whether movement of the animal has occurred. For example, the first information may indicate whether the animal is detected in multiple regions included in the preview image. For example, the second information may indicate whether the animal is present in multiple regions included in the preview image.

In an embodiment, the at least one processor 330 may determine the body part of the animal included in the preview image, based on the first information. The at least one processor 330 may divide the preview image into a specified number (e.g., 12 in the horizontal direction × 9 in the vertical direction) of regions, and may analyze a region in which the animal is detected among the divided regions. The at least one processor 330 may determine the body part of the animal included in the preview image, based on the analysis of the region in which the animal is detected. According to various embodiments, the body part of the animal may include at least one of a head, a torso, a tail, a forelimb, or a hind limb.

In an embodiment, the at least one processor 330 may determine, based on the second information, whether movement of the animal included in the preview image has occurred. The at least one processor 330 may divide the preview image into a specified number (e.g., 12 in a horizontal direction x 9 in a vertical direction) of regions, and may analyze pixel changes for each of the divided regions. The at least one processor 330 may identify, based on the analysis of the pixel change for each region, a region in which motion is detected in the preview image. According to various embodiments, the at least one processor 330 may detect a region in the preview image, in which the animal is detected, and a region in the preview image, in which movement is detected, and may determine that movement of the animal has occurred when there is a region that satisfies the two conditions. For example, when a body part including at least one of the animal's forelimb or hind limb is detected from the preview image based on the first information, the at least one processor 330 may determine, based on the second information, whether movement has occurred with respect to the animal. When, as a result of the determination, movement of the animal has occurred, the at least one processor 330 may calculate a speed according to the movement of the animal. For example, the speed may be calculated by using an optical flow of the preview image. The at least one processor 330 may identify pixel value differences between the preview image and multiple frames acquired at a specified time interval before the preview image, and may extract the optical flow, based on the relationship between the identified pixel value differences and neighboring pixels. The at least one processor 330 may estimate pixel movement in the preview image, based on the extracted optical flow, and calculate the speed according to the animal's movement, based on the estimated pixel movement. For example, when, based on the first information, the animal's forelimb and/or hind limb is not detected from the preview image, and a body part including at least one of a head, an ear, a torso, or a tail is detected, the at least one processor 330 may determine that movement of the animal is not fast, as compared to when a forelimb or a hind limb is detected. In this case, the at least one processor 330 may estimate that the magnitude of movement of the animal is less than a threshold value, even when it is determined that movement has occurred with respect to the animal.

In an embodiment, the at least one processor 330 may configure an exposure value of the at least one camera 310, based on an estimated speed of a body part of the animal. When the estimated speed is greater than or equal to a reference speed, the at least one processor 330 may determine that the magnitude of the animal's movement is greater than a threshold value. When the estimated speed is less than the reference speed, the at least one processor 330 may determine that the magnitude of the animal's movement is less than the threshold value. The reference speed is a speed that is used as a reference to determine the magnitude of an animal's movement for configuring at least one shooting parameter, and may be determined according to configuration by a manufacturer of the electronic device 300 or a user. For example, when it is determined that the magnitude of the animal's movement is greater than the threshold, the at least one processor 330 may configure a first exposure value for the at least one camera 310, and capture an image including the animal, based on the first exposure value. When it is determined that the magnitude of the animal's movement is less than the threshold value, the at least one processor 330 may configure a second exposure value, which is greater than the first exposure value, for the at least one camera 310, and may capture an image including the animal, based on the second exposure value. The exposure value configured for the at least one camera 310 may be associated with the shutter speed configuration of the at least one camera 310. For example, the greater the exposure value, the slower the shutter speed may be configured, and a shutter speed corresponding to the second exposure value configuration may be slower than a shutter speed corresponding to the first exposure value configuration.

According to various embodiments, the at least one processor 330 may determine a shutter speed (or exposure value) of the at least one camera 310 stepwise or in parallel in response to the estimated speed.

For example, the at least one processor 330 may configure the at least one camera 310 to have a faster shutter speed as the estimated speed increases, thereby minimizing motion blur caused by the movement of the animal included in the preview image. The at least one processor 330 may pre-define shutter speed levels to be applied to ranges corresponding to the animal's movement speeds, and may determine the shutter speed differentially based on the range to which the estimated speed belongs. For example, when the shutter speed according to the default configuration is 1/60s, the electronic device 300 may determine that a configuration value of the shutter speed is gradually reduced stepwise by applying different ratios based on 1/60s according to the range. When the estimated speed of the animal is less than a first threshold value, the at least one processor 330 may not perform a shutter speed adjustment and may capture an image based on a shutter speed according to a default configuration. When the estimated speed is equal to or greater than the first threshold value and less than a second threshold value, the at least one processor 330 may adjust the shutter speed to have a configuration value of approximately 0.8 times the default shutter speed,. When the estimated speed is equal to or greater than the second threshold value and less than a third threshold value, the at least one processor 330 may adjust the shutter speed to have a configuration value of approximately 0.6 times the shutter speed according to a default configuration. When the estimated speed is equal to or greater than the third threshold, the at least one processor 330 may adjust the shutter speed to have a configuration value of approximately 0.4 times a shutter speed according to a default configuration. The description of the range and the numerical values of the shutter speed configuration is merely an example, and the disclosure is not limited thereto.

According to various embodiments, the at least one shooting parameter may further include at least one of the sharpness or color correction level of the at least one camera 310, in addition to an exposure value (or shutter speed). For example, when it is determined that the magnitude of the animal's movement is greater than the threshold value, the at least one processor 330 may configure the sharpness or color correction level of the at least one camera 310 to be a first level. When it is determined that the magnitude of the animal's movement is less than the threshold value, the at least one processor 330 may configure the sharpness or color correction level of the at least one camera 310 to be a second level lower than the first level. As another example, the at least one processor 330 may determine the sharpness and/or color correction level of the at least one camera 310 stepwise or in parallel in response to the estimated speed. The at least one processor 330 may increase the sharpness and/or color correction level of the at least one camera 310 as the estimated speed increases, thereby enabling the characteristics (e.g., fur, eye color) of the animal included in the preview image to be accurately represented. The at least one processor 330 may pre-define sharpness and/or color correction levels to be applied to ranges corresponding to the animal's movement speed, and may determine the sharpness and/or color correction level differentially based on the range to which the estimated speed belongs. When the estimated speed of the animal is less than a first threshold value, the at least one processor 330 may capture an image based on a sharpness and/or color correction level according to a default configuration, without adjusting the sharpness and/or color correction level. When the estimated speed is equal to or greater than the first threshold value and is less than a second threshold value, the at least one processor 330 may configure the sharpness and/or color correction level to be approximately 1.2 times the default configuration. When the estimated speed is equal to or greater than the second threshold value and less than a third threshold value, the at least one processor 330 may configure the sharpness and/or color correction level to be approximately 1.4 times the default configuration. When the estimated speed is equal to or higher than the third threshold, the at least one processor 330 may configure the sharpness and/or color correction level to be approximately 1.6 times the default configuration. The description of the range and the numerical values of the sharpness and/or color correction level configuration is merely an example, and the disclosure is not limited thereto.

According to various embodiments, when multiple animals are detected from the preview image, the at least one processor 330 may determine the at least one shooting parameter, based on at least one of the movement or position of each animal, or whether focus is configured. For example, the at least one processor 330 may configure the at least one shooting parameter, based on an animal detected as having the fastest movement speed among the multiple animals. For example, the at least one processor 330 may configure the at least one shooting parameter, based on an animal located in a position corresponding to a user's region of interest in the preview image. The region of interest may correspond to the central part of the screen of the display 320 or a region on which the user has configure focus or which is selected by the user.

In an embodiment, the at least one processor 330 may acquire an image including the animal, based on the configured shooting parameter. According to various embodiments, the configuration of sharpness and/or color correction levels may be performed, after capturing of an image of the animal, as post-processing of the captured image. When the movement of the animal is detected while the preview image is provided, the at least one processor 330 may improve the representation of the animal's characteristics by correcting the sharpness and/or color of the captured image of the animal, instead of changing a configuration value associated with sharpness and/or color correction before image capturing.

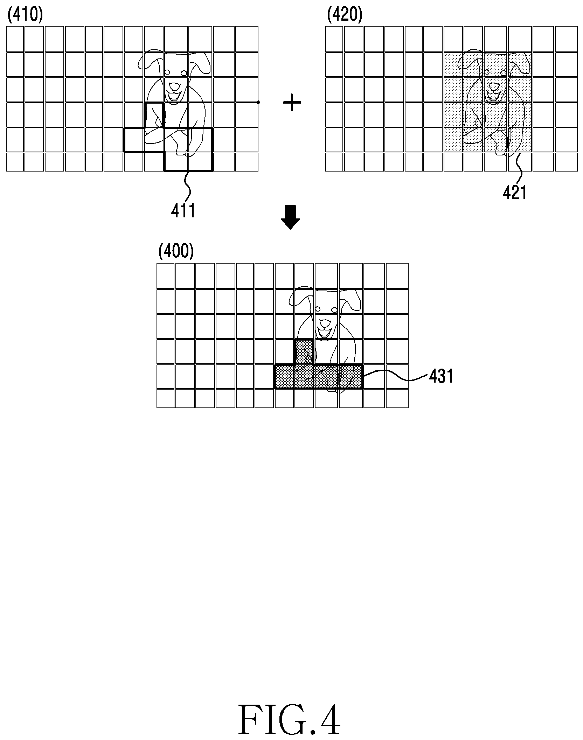

FIG. 4 is a diagram illustrating a method for determining movement of an animal's forelimb or hind limb when capturing an image of the animal according to an embodiment.

Referring to FIG. 4, while the electronic device 300 provides a preview image acquired from at least one camera (e.g., the camera module 180 in FIG. 1 or the camera 310 in FIG. 3), the electronic device 300 may detect an object from the preview image. The object may include an animal such as a dog or a cat.

In an embodiment, when the electronic device 300 recognizes that the object included in the preview image is an animal (e.g., a dog), the electronic device 300 may acquire a first map 410 indicating whether the animal is detected in multiple regions included in the preview image and a second map 420 indicating whether movement of the animal has occurred in multiple regions included in the preview image. According to various embodiments, the multiple regions may correspond to multiple grids generated by dividing the preview image by a specified ratio or multiple pixel units included in the preview image.

In an embodiment, the electronic device 300 may identify, among the multiple regions in the preview image, a region in which the animal is detected, based on the first map 410, and determine a body part of the animal included in the preview image, based on an analysis of the region in which the animal is detected. For example, the electronic device 300 may identify, from the first map 410, a region 411 in which the animal's forelimb or hind limb is detected.

In an embodiment, the electronic device 300 may identify a region 421 in which movement is detected among the multiple regions in the preview image, based on the second map 420. The electronic device 300 may determine whether the pixel value of each of the multiple regions changes, and may identify the region 421 in which movement is detected, based on the determination result.

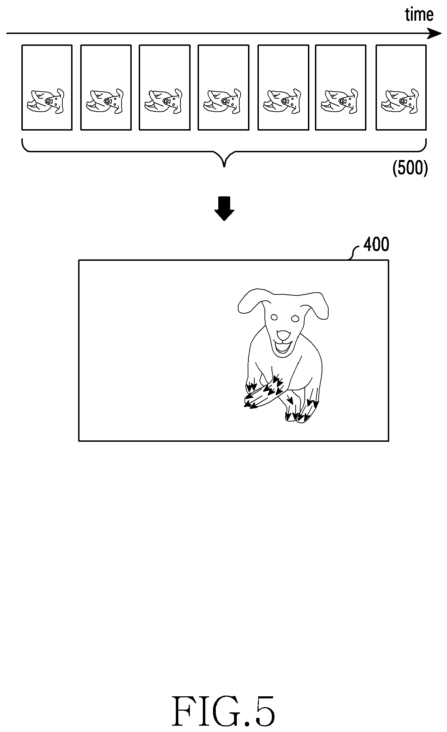

In an embodiment, the electronic device 300 may determine, based on the first map 410 and the second map 420, whether movement has occurred in a region where the animal's forelimb or hind limb has been detected. For example, the electronic device 300 may identify whether there is an overlapping region 431 of the region 411, which is identified from the first map 410 and in which the animal's forelimb or hind limb is detected, and the region 421, which is identified from the second map 420 and in which the movement is detected, in the preview image 400. When it is identified that the overlapping region 431 is present in the preview image 400, the electronic device 300 may calculate a speed according to the animal's movement. Specific details regarding the calculation of the speed according to the animal's movement will be described with reference to FIG. 5.

FIG. 5 is a diagram illustrating a method for calculating a speed according to an animal's movement according to an embodiment. Referring to FIG. 5, when movement of the animal's forelimb or hind limb is detected from the preview image, the electronic device 300 may calculate an estimated speed according to the animal's movement. In an embodiment, the electronic device 300 may identify a pixel change, based on multiple frames 500 acquired at a predetermined time interval before the preview image 400. The electronic device 300 may extract an optical flow for an overlapping region (e.g., the overlapping region 431 in FIG. 4) in the preview image 400 by using pixel value differences between the preview image 400 and the multiple frames 500. According to various embodiments, the electronic device 300 may estimate the optical flow, based on the Lucas-Kanade algorithm. In this case, the electronic device 300 may estimate the optical flow for the preview image 400 and the multiple frames 500, based on three conditions of brightness consistency, temporal persistence, and spatial coherency. The brightness constancy may mean that the value of a pixel on an object in an image remains unchanged even when a frame changes, and the temporal persistence may mean that time change progresses faster than the object movement in an image, and thus the object movement is not significant between consecutive frames. The spatial coherency may mean that points adjacent to each other in an image are more likely to belong to the same object and have the same movement, and thus the optical flow in a window region N(y, x) around a pixel (y, x) is the same. For example, the electronic device 300 may calculate an optical flow for the overlapping region 431 in the preview image 400 by using Equation 1.

[Equation 1]

$$\vec{v}^T = \begin{pmatrix} v \\ u \end{pmatrix} = (A^T A)^{-1} A^T b$$

$$= \begin{pmatrix} \sum_{i=1}^{n} \left( \dfrac{\partial f(y_i, x_i)}{\partial y} \right)^2 & \sum_{i=1}^{n} \dfrac{\partial f(y_i, x_i)}{\partial y} \dfrac{\partial f(y_i, x_i)}{\partial x} \\ \sum_{i=1}^{n} \dfrac{\partial f(y_i, x_i)}{\partial y} \dfrac{\partial f(y_i, x_i)}{\partial x} & \sum_{i=1}^{n} \left( \dfrac{\partial y(y_i, x_i)}{\partial x} \right)^2 \end{pmatrix}^{-1} \begin{pmatrix} -\sum_{i=1}^{n} \dfrac{\partial f(y_i, x_i)}{\partial y} \dfrac{\partial f(y_i, x_i)}{\partial t} \\ -\sum_{i=1}^{n} \dfrac{\partial f(y_i, x_i)}{\partial x} \dfrac{\partial f(y_i, x_i)}{\partial t} \end{pmatrix}$$

In an embodiment, the electronic device 300 may estimate pixel movement in the preview image 400, based on the calculated optical flow, and may estimate (or calculate) the speed of the animal's movement, based on the estimated pixel movement.

Referring back to FIG. 4, the electronic device 300 may configure at least one shooting parameter stepwise based on the speed of the animal estimated based on the optical flow of the overlapping region 431 in the preview image 400. The at least one shooting parameter may include at least one of a shutter speed (or exposure value), sharpness, or color correction of the at least one camera 310. In an embodiment, the electronic device 300 may pre-define a configuration level of the shooting parameter for each range corresponding to the movement speed of an animal, and determine the at least one shooting parameter according to a configuration level applied to the range to which the estimated speed of the animal belongs. For example, when the estimated speed of the animal is less than a first threshold value, the electronic device 300 may configure the configuration level as level 1. When the configuration level is configured as level 1, the electronic device 300 may capture an image based on a default configuration without adjusting the at least one parameter (e.g., shutter speed, sharpness, or color correction level). The electronic device 300 may configure the configured level as level 2 when the estimated speed of the animal is equal to or greater than a first threshold value and less than a second threshold value. When the configuration level is configured as level 2, the electronic device 300 may configure the shutter speed to have a value approximately 0.8 times a default configuration, and may configure the sharpness and/or color correction level to have a value approximately 1.2 times the default configuration. The electronic device 300 may configure the configured level as level 3 when the estimated speed of the animal is equal to or greater than the second threshold value and less than a third threshold value. When the configuration level is configured as level 3, the electronic device 300 may configure the shutter speed to have a value approximately 0.6 times the default configuration, and may configure the sharpness and/or color correction level to have a value approximately 1.4 times the default configuration. When the estimated speed of the animal is equal to or greater than the third threshold, the electronic device 300 may configure the configuration level as level 4. When the configuration level is configured as level 4, the electronic device 300 may configure the shutter speed to have a value approximately 0.4 times the default configuration, and may configure the sharpness and/or color correction level to have a value approximately 1.6 times the default configuration. According to various embodiments, the electronic device 300 may determine a configuration value for a shutter speed among the shooting parameters before capturing an image of the animal (e.g., before a shutter button input), and may determine, after capturing an image of the animal (e.g., after a shutter button input), a configuration value of sharpness and/or a color correction level through post-processing of the image.

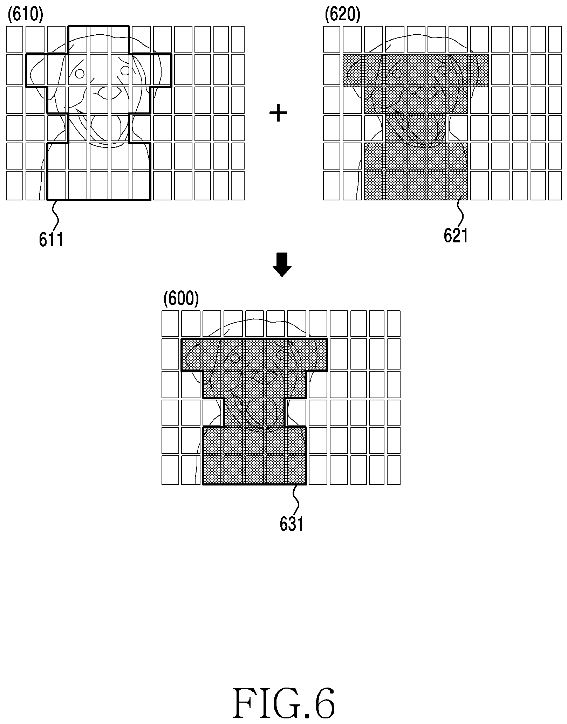

FIG. 6 is a diagram illustrating a method for determining movement of an animal's head or torso when capturing an image of the animal according to an embodiment.

Referring to FIG. 6, while providing a preview image acquired from at least on camera (e.g., the camera module 180 in FIG. 1 or the camera 310 in FIG. 3), the electronic device 300 may detect an object from the preview image. The object may include an animal such as a dog or a cat.

In an embodiment, the electronic device 300 may recognize that the object included in the preview image is an animal (e.g., a dog), and may acquire a first map 610 indicating whether the animal is detected in multiple regions included in the preview image, and a second map 620 indicating whether movement of the animal has occurred in the multiple regions included in the preview image. According to various embodiments, the multiple regions may correspond to multiple grids generated by dividing the preview image by a designated ratio, or to multiple pixel units included in the preview image.

In an embodiment, the electronic device 300 may identify, based on the first map 610, a region in which the animal is detected among multiple regions in the preview image, and may determine, based on the analysis of the region in which the animal is detected, that the animal's forelimb or hind limb is not detected in the preview image and the animal's head (including an ear) and torso are detected. For example, the electronic device 300 may identify, from the first map 610, a region 611 in which the animal's head (including ears) and torso are detected.

In an embodiment, the electronic device 300 may identify, based on the second map 620, a region 621, in which movement is detected, among multiple regions in the preview image. The electronic device 300 may determine whether the pixel value of each of the multiple regions changes, and identify, based on the determination result, the region 621 in which the movement is detected.

In an embodiment, the electronic device 300 may determine, based on the first map 610 and the second map 620, whether movement has occurred in a region in which the head (including the ear) and the torso have been detected. For example, the electronic device 300 may determine whether there is an overlapped region 631 of the region 611, which is identified from the first map 610 and in which the animal's head (including the ear) and torso are detected, and the region 621, which is identified from the second map 620 and in which the movement is detected, in the preview image 600. When it is determined that the overlapping region 631 is present in the preview image 600, the electronic device 300 may adjust the shutter speed to a value reduced to a predetermined ratio (e.g., about 0.8 to 0.9 times) of the shutter speed according to a default configuration, or may configure the sharpness and/or color correction level to be increased to a predetermined ratio (e.g., about 1.2 to 1.3 times) of a default configuration. According to various embodiments, the electronic device 300 may determine a configuration value for the shutter speed before capturing an image of the animal (e.g., before a shutter button input), and may determine, after capturing the image of the animal (for example, after a shutter button input), a configuration value for the sharpness and/or a color correction level through post-processing of the image.

According to various embodiments, when the animal's head (including the ear) and torso are detected from the preview image 600, the electronic device 300 may determine that the animal's movement is not fast, and may capture an image, based on a default configuration, without adjusting at least one parameter (e.g., shutter speed, sharpness, or color correction level) regardless of whether movement is detected.

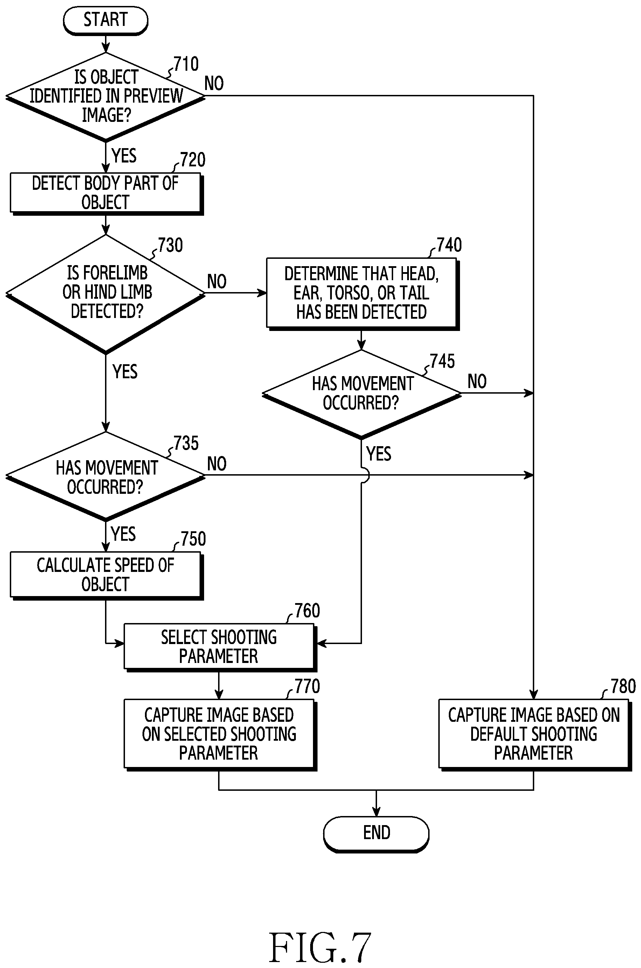

FIG. 7 is a flowchart illustrating a method by which in an electronic device 300 captures an image by considering an animal's movement according to an embodiment. The operations illustrated in FIG. 7 may be understood as functions performed by at least one processor (e.g., the processor 120 in FIG. 1 or the processor 330 in FIG. 3) included in the electronic device 300.

Referring to FIG. 7, in operation 710, the electronic device 300 may determine whether, while a preview image acquired from at least one camera (e.g., the camera module 180 in FIG. 1 or the camera 310 in FIG. 3) is displayed through a display (e.g., the display module 160 in FIG. 1 or the display 320 in FIG. 3), an animal is identified in the preview image. For example, while providing the preview image, the electronic device 300 may determine, in real time by using AI-based image recognition technology, whether an object corresponding to an animal is recognized from the preview image.

When, as a result of the determination, an animal is identified in the preview image (operation 710-Yes), the electronic device 300 may detect a body part of the animal included in the preview image in operation 720. The electronic device 300 may identify, based on a first map indicating whether the animal is detected in multiple regions included in the preview image, a region in which the animal is detected among the multiple regions in the preview image, and may detect a body part of the animal included in the preview image, based on the analysis of the region in which the animal is detected. The body part of the animal may include at least one of a head, a torso, a tail, a forelimb, or a hind limb.

When, as a result of the determination, the animal is not identified in the preview image (operation 710-No), the electronic device 300 may maintain, in operation 780, a default configuration without adjusting at least one shooting parameter.

According to an embodiment, in operation 730, the electronic device 300 may determine whether a body part, such as a forelimb or a hind limb, of the animal is detected from the preview image. The electronic device 300 may identify, based on the first map, whether a region in which the animal's forelimb or hind limb is detected is present among multiple regions in the preview image.

When, as a result of the determination, the animal's forelimb or hind limb is detected in the preview image (operation 730-Yes), the electronic device 300 may determine, in operation 735, whether movement of the animal is detected from the preview image. The electronic device 300 may identify a region in the preview image, in which the animal's movement is detected, based on a second map indicating whether there is the animal's movement in the multiple regions included in the preview image. When, as a result of the determination, no movement of the animal is detected from the preview image (operation 735-No), the electronic device 300 may maintain, in operation 780, the default configuration without adjusting at least one shooting parameter. When, as a result of the determination, movement of the animal is detected from the preview image (operation 735-Yes), the electronic device 300 may calculate a speed according to the movement of the animal in operation 750.

According to an embodiment, in operation 750, the electronic device 300 may calculate the speed according to the movement of the animal by using an optical flow of the preview image. The electronic device 300 may identify a pixel change, based on multiple frames acquired at a specified time interval before the preview image, and extract an optical flow for the region in the preview image in which the animal's forelimb or hind limb has been detected, by using pixel value differences between the preview image and the multiple frames. The electronic device 300 may estimate the speed of the animal, based on the extracted optical flow. For example, when the animal is approaching the electronic device 300 head-on, the electronic device 300 may identify, from the multiple frames, that the size of a region in which the animal is detected gradually increases, and may estimate the direction and speed of the animal's movement, based on pixel changes between the preview image and the multiple frames.

According to an embodiment, in operation 760, the electronic device 300 may select a configuration value of at least one shooting parameter, based on the calculated animal's speed. The at least one shooting parameter may include at least one of a shutter speed (or exposure value), sharpness, or color correction level of at least one camera 310. According to various embodiments, the electronic device 300 may select a configuration value of the at least one shooting parameter stepwise according to the range corresponding to the speed of the animal. When the speed of the animal is less than a first threshold value, the electronic device 300 may select a configuration value according to a default configuration without adjusting the at least one shooting parameter. When the speed of the animal is in a range that is equal to or greater than the first threshold value and less than a second threshold value, the electronic device 300 may select the shutter speed configuration value to be approximately 0.8 times a default configuration, and may select the sharpness and/or color correction level to be approximately 1.2 times a default configuration. When the speed of the animal is in a range that is equal to or greater than the second threshold value and less than a third threshold value, the electronic device 300 may select the shutter speed configuration value to be approximately 0.6 times the default configuration, and may select the sharpness and/or color correction level to be approximately 1.4 times the default configuration. When the speed of the animal is equal to or greater than the third threshold value, the electronic device 300 may select the shutter speed configuration value to be approximately 0.4 times the default configuration, and select the sharpness and/or color correction level to be approximately 1.6 times the default configuration.

According to an embodiment, in operation 770, the electronic device 300 may capture an image including the animal, based on the at least one selected shooting parameter.

On the other hand, when, as a result of the determination in operation 730, the animal's forelimb or hind limb is not detected in the preview image (operation 730-No), the electronic device 300 may determine, in operation 740, that the head, ear, torso, or tail portion of the animal has been detected in the preview image. The electronic device 300 may identify, based on the first map, a region in which the head, ear, torso, or tail portion of the animal is detected, among the multiple regions in the preview image.

According to an embodiment, in operation 745, the electronic device 300 may determine whether movement of the animal is detected from the preview image. The electronic device 300 may identify, based on the second map, a region in the preview image in which the movement of the animal is detected. When, as a result of the determination, no movement of the animal is detected from the preview image (operation 745-No), the electronic device 300 may maintain, in operation 780, the default configuration without adjusting the at least one shooting parameter. When, as a result of the determination, the movement of the animal is detected from the preview image (operation 745-Yes), the electronic device 300 may select, in operation 760, at least one shooting parameter to have a configuration value adjusted by a predetermined ratio from a default configuration. In operation 760, the electronic device 300 may adjust the shutter speed to a value reduced to a predetermined ratio (e.g., about 0.8-0.9 times) of the shutter speed according to a default configuration, or may configure the sharpness and/or color correction level to be increased to a predetermined ratio (e.g., about 1.2-1.3 times) of the default configuration. According to various embodiments, when the head, ear, body, or tail of the animal is detected from the preview image, the electronic device 300 may select a configuration value according to a default configuration without adjusting the at least one shooting parameter, regardless of the result of the determination in operation 745. According to an embodiment, in operation 770, an image including the animal may be captured based on the at least one selected shooting parameter.

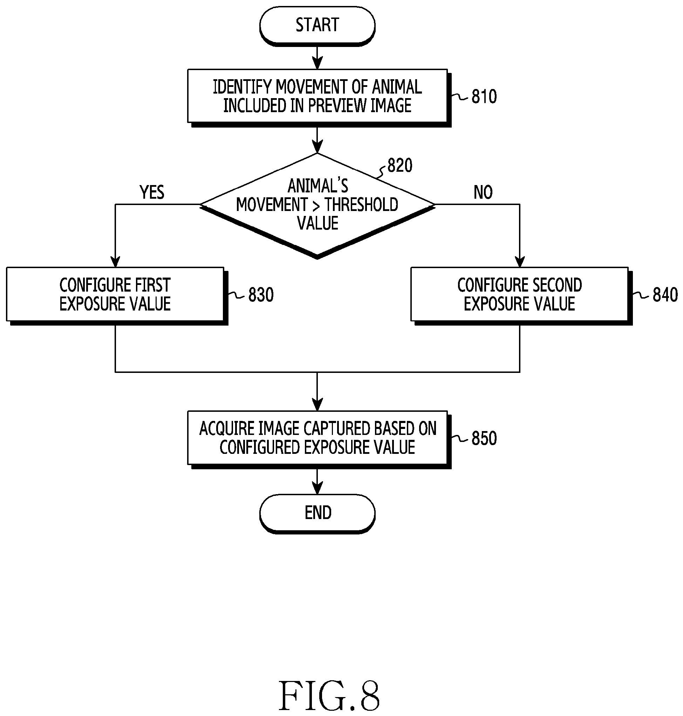

FIG. 8 is a flowchart illustrating a method for operating an electronic device 300 according to an embodiment. According to an embodiment, the electronic device 300 may be a device that, when capturing a subject including an animal, determines the subject's movement from a preview image acquired via a camera, and configures shooting parameters in consideration of the determined movement of the subject, and may correspond to the electronic device 101 illustrated in FIG. 1. The operations in FIG. 8 may be performed by at least one processor (e.g., the processor 120 in FIG. 1 or the processor 330 in FIG. 3) included in the electronic device 300.

Referring to FIG. 8, in operation 810, in response to execution of a camera application, the electronic device 300 may display a preview image acquired from at least one camera (e.g., the camera module 180 in FIG. 1 or the camera 310 in FIG. 3) on a display (e.g., the display module 160 in FIG. 1 or the display 320 in FIG. 3) and may identify movement of an animal included in the preview image. According to various embodiments, in operation 810, the electronic device 300 may, while providing the preview image, identify, in real time, whether an animal is included in an object entering the preview image, by using AI-based image recognition technology.

According to an embodiment, in operation 810, the electronic device 300 may identify the movement of the animal in response to detection of the animal. The electronic device 300 may acquire first information for identifying a body part of the animal and second information for determining whether movement of the animal has occurred, and may identify the movement of the animal, based on the first information and the second information. For example, the first information may indicate whether the animal is detected in multiple regions included in the preview image. As another example, the second information may indicate whether the animal's movement is present in the multiple regions included in the preview image.

According to an embodiment, in operation 810, the electronic device 300 may determine a body part of the animal included in the preview image, based on the first information. For example, the electronic device 300 may divide the preview image into a specified number (e.g., 12 in the horizontal direction x 9 in the vertical direction) of regions, and may analyze a region, in which the animal is detected, among the divided regions. The electronic device 300 may determine a body part of the animal included in the preview image, based on the analysis of the region in which the animal is detected. The body part of the animal may include at least one of a head, a torso, a tail, a forelimb, or a hind limb.

According to an embodiment, in operation 810, the electronic device 300 may determine, based on the second information, whether movement of the animal included in the preview image has occurred. For example, the electronic device 300 may divide the preview image into a specified number (e.g., 12 in the horizontal direction x 9 in the vertical direction) of regions, and may identify a region in the preview image, in which movement is detected, by analyzing a pixel change in each of the divided regions. The electronic device 300 may detect the region in which the animal is detected in the preview image and the region in which a movement is detected in the preview image, and when there is a region that satisfies the two conditions, may determine that movement has occurred in the animal.

According to various embodiments, when a body part including at least one of the animal's forelimb or hind limb is detected from the preview image, the electronic device 300 may determine, based on the second information, whether movement of the animal has occurred. When the determination result indicates that movement of the animal has occurred, the electronic device 300 may calculate a speed according to the animal's movement. For example, the animal's speed may be calculated using optical flow for the preview image. The electronic device 300 may identify a pixel value difference between the preview image and multiple frames acquired at a specified time interval before the preview image, and may extract the optical flow, based on the relationship between the identified pixel value differences and neighboring pixels. The electronic device 300 may estimate pixel movement in the preview image, based on the extracted optical flow, and may calculate the speed according to movement of the animal, based on the estimated pixel movement.

According to various embodiments, when the animal's forelimb and/or hind limb is not detected from the preview image, and a body part including at least one of a head, an ear, a torso, and a tail is detected, the electronic device 300 may determine that the animal's movement is not fast as compared to when a forelimb or a hind limb is detected. In this case, the electronic device 300 may determine that the animal's movement has occurred, but may estimate that the magnitude of the movement of the animal is less than a threshold value.

According to an embodiment, in operation 820, the electronic device 300 may determine whether the magnitude of the identified movement of the animal is greater than a threshold value. For example, in the case in which a body part including at least one of the animal's forelimb or hind limb is detected from the preview image, when the speed of the animal's movement is greater than or equal to a reference speed, the electronic device 300 may determine that the magnitude of the animal's movement is greater than the threshold value. When the speed of the animal's movement is less than the reference speed, the electronic device 300 may determine that the magnitude of the animal's movement is less than the threshold value. The reference speed may be a speed that is a reference for determining the magnitude of an animal's movement in order to configure at least one shooting parameter, and may be determined based on configuration by a manufacturer of the electronic device 300 or a user. For example, when a body part including at least one of a head, an ear, a torso, or a tail of the animal is detected from the preview image, the electronic device 300 may determine that the magnitude of the animal's movement is less than the threshold value.

When, as a result of the determination, the magnitude of the animal's movement is greater than the threshold value (operation 820-Yes), the electronic device 300 may configure a first exposure value for the camera 310 in operation 830.

When, as a result of the determination, the magnitude of the animal's movement is less than the threshold value (operation 820-No), the electronic device 300 may configure, in operation 840, a second exposure value greater than the first exposure value for the camera 310. An exposure value configured for the camera 310 may be associated with a shutter speed configuration of the camera 310. For example, as the exposure value increases, the shutter speed may be configured to be slower, and the shutter speed corresponding to the second exposure value configuration may be slower than the shutter speed corresponding to the first exposure value configuration.

According to various embodiments, the at least one shooting parameter may further include at least one of the sharpness or color correction level of the camera 310, in addition to an exposure value (or shutter speed). When the magnitude of the animal's movement is determined to be greater than the threshold value, the electronic device 300 may configure the sharpness or color correction level of the camera 310 corresponding to a first level. When it is determined that the magnitude of the animal's movement is less than the threshold value, the electronic device 300 may configure the sharpness or color correction level of the camera 310 to be a second level lower than the first level.

According to various embodiments, in operation 830 and/or operation 840, the electronic device 300 may determine a configuration value of at least one shooting parameter stepwise or in parallel in response to the estimated speed. For example, the electronic device 300 may configure the camera 310 to have a low shutter speed as the estimated speed increases, thereby minimizing a motion blur caused by movement of the animal included in the preview image. The electronic device 300 may pre-define shutter speed levels to be applied to ranges corresponding to the speed of the animal's movement, and may determine the shutter speed differentially based on the range to which the estimated speed belongs. When the estimated speed of the animal is less than a first threshold, the electronic device 300 may capture an image based on the shutter speed according to a default configuration, without performing shutter speed adjustment. When the estimated speed is equal to or higher than the first threshold value and less than a second threshold value, the electronic device 300 may adjust the shutter speed to have a configuration value that corresponds to approximately 0.8 times the shutter speed according to the default configuration. When the estimated speed is equal to or greater than the second threshold value and less than a third threshold value, the electronic device 300 may adjust the shutter speed to have a configuration value that corresponds to approximately 0.6 times the shutter speed according to the default configuration. When the estimated speed is equal to or greater than the third threshold, the electronic device 300 may adjust the shutter speed to have a configuration value that corresponds to approximately 0.4 times the shutter speed according to a basic configuration. The description of the range and numerical values of the shutter speed configuration is provided merely as an example, and the disclosure is not limited thereto. As another example, the electronic device 300 may increase the sharpness or color correction level of the camera 310 as the estimated speed increases, thereby enabling the characteristics (e.g., fur, eye color) of the animal included in the preview image to be accurately represented. The electronic device 300 may pre-define sharpness and/or color correction levels to be applied to ranges corresponding to the speed of the animal's movement, and may determine the sharpness and/or color correction level differentially based on the range to which the estimated speed belongs. When the estimated speed of the animal is less than a first threshold value, the electronic device 300 may capture an image based on a sharpness and/or color correction level according to a default configuration, without adjusting the sharpness and/or color correction level. When the estimated speed is equal to or greater than the first threshold value and less than a second threshold value, the electronic device 300 may configure the sharpness and/or color correction level to be approximately 1.2 times the default configuration. When the estimated speed is equal to or greater than the second threshold and less than a third threshold, the electronic device 300 may configure the sharpness and/or color correction level to be approximately 1.4 times the default configuration. When the estimated speed is equal to or greater than the third threshold, the electronic device 300 may configure the sharpness and/or color correction level to be approximately 1.6 times the default configuration. The description of the range and numerical value of the sharpness and/or color correction level configuration is provided merely as an example, and the disclosure is not limited thereto.

According to an embodiment, in operation 850, the electronic device 300 may acquire an image captured based on the configured exposure value. According to various embodiments, the configuration of the sharpness and/or color correction level among the at least one shooting parameter configured for the camera 310 may be performed, after the animal is captured, as post-processing of the captured image. When the animal's movement is detected while providing the preview image, the electronic device 300 may improve the representation of the animal's characteristics by correcting the sharpness and/or color of the captured image of the animal, instead of changing a configuration value associated with sharpness and/or color correction before the image is captured.

An electronic device (e.g., an electronic device 300) according to an embodiment may include a camera 310, a display 320, a processor 330, and a memory 340 configured to store instructions. The processor 330 may be configured to, when the instructions are executed, cause the electronic device 300 to: while a preview image acquired by using the camera 310 is displayed on the display 320, identify movement of an animal included in the preview image; when the identified movement has a magnitude greater than a threshold value, acquire, via the camera 310, an image captured based on a first exposure value; and, when the identified movement has a magnitude less than the threshold value, acquire, via the camera 310, an image captured based on a second exposure value greater than the first exposure value.

In an embodiment, the processor 330 may be configured to, when the instructions are executed, cause the electronic device 300 to acquire, while the preview image is displayed on the display 320, first information for identifying a body part of the animal and second information for determining whether the animal's movement has occurred, and to identify the movement of the animal included in the preview image, based on the first information and the second information.

In an embodiment, the processor 330 may be configured to, when the instructions are executed, cause the electronic device 300 to divide the preview image into multiple regions and analyze a region, in which the animal is detected, among the multiple regions to identify a body part of the animal.

In an embodiment, the processor 330 may be configured to, when the instructions are executed, cause the electronic device 300 to divide the preview image into multiple regions, and analyze pixel movement for each of the multiple regions to determine whether the animal's movement has occurred.

In an embodiment, the processor 330 may be configured to, when the instructions are executed, cause the electronic device 300 to, when the body part of the animal is determined to correspond to at least one of a forelimb and a hind limb, determine whether the animal's movement has occurred, based on the second information, and, when the animal's movement is determined to have occurred, calculate an estimated speed according to the animal's movement.

In an embodiment, the processor 330 may be configured to, when the instructions are executed, cause the electronic device 300 to extract an optical flow from multiple frames acquired at a specified time interval while the preview image is provided, estimate pixel movement in the preview image, based on the extracted optical flow, and calculate the estimated speed, based on the estimated pixel movement.

In an embodiment, the processor 330 may be configured to, when the instructions are executed, cause the electronic device 300 to determine that the magnitude of the identified movement of the animal is greater than the threshold value when the calculated estimated speed is equal to or greater than a reference speed, and to capture an image including the animal, based on the first exposure value.

In an embodiment, the processor 330 may be configured to, when the instructions are executed, cause the electronic device 300 to determine that the magnitude of the identified movement of the animal is less than the threshold value when the calculated estimated speed is less than the reference speed, and to capture an image including the animal, based on the second exposure value.

In an embodiment, the processor 330 may be configured to, when the instructions are executed, cause the electronic device 300 to estimate that the magnitude of the identified movement of the animal is less than the threshold value when the body part of the animal is determined to correspond to at least one of a head, an ear, a torso, or a tail, and to capture an image including the animal, based on the second exposure value.

In an embodiment, the processor 330 may be configured to, when the instructions are executed, cause the electronic device 300 to configure a sharpness or color correction level of the camera 310 to be a first level when the magnitude of the identified movement is greater than the threshold value, and to configure the sharpness or color correction level of the camera 310 to be a second level lower than the first level when the magnitude of the identified movement is less than the threshold value.

A method of operating an electronic device (e.g., an electronic device 300), according to an embodiment, may include an operation of, while a preview image acquired using a camera 310 is displayed on a display 320, identifying movement of an animal included in the preview image, an operation of, when the identified movement has a magnitude greater than a threshold value, acquiring, via the camera 310, an image captured based on a first exposure value, and an operation of, when the identified movement has a magnitude less than the threshold value, acquiring, via the camera 310, an image captured based on a second exposure value greater than the first exposure value.

In an embodiment, the operation of identifying the movement of the animal included in the preview image may include an operation of acquiring, while the preview image is displayed on the display 320, first information for identifying a body part of the animal and second information for determining whether the animal's movement has occurred, and an operation of identifying the movement of the animal included in the preview image, based on the first information and the second information.

In an embodiment, the operation of acquiring the first information may include an operation of dividing the preview image into multiple regions, and an operation of analyzing a region in which the animal is detected among the multiple regions to identify a body part of the animal.

In an embodiment, the operation of acquiring the second information may include the operation of dividing the preview image into multiple regions, and an operation of analyzing pixel movement for each of the multiple regions to determine whether the animal's movement has occurred.

In an embodiment, the operation of identifying the movement of the animal included in the preview image may include an operation of, when the body part of the animal is determined to correspond to at least one of a forelimb and a hind limb, determining, based on the second information, whether the animal's movement has occurred, and an operation of calculating an estimated speed according to the animal's movement, when the animal's movement is determined to have occurred.

In an embodiment, the operation of calculating the estimated speed according to the animal's movement may include an operation of extracting an optical flow from multiple frames acquired at a specified time interval while the preview image is provided, an operation of estimating pixel movement in the preview image, based on the extracted optical flow, and an operation of calculating the estimated speed, based on the estimated pixel movement.

In an embodiment, the method may further include an operation of determining that the magnitude of the identified movement of the animal is greater than the threshold value when the calculated estimated speed is greater than or equal to a reference speed, and an operation of capturing an image including the animal, based on the first exposure value.

In an embodiment, the method may further include an operation of determining that the identified movement of the animal is less than the threshold value when the calculated estimated speed is less than the reference speed, and an operation of capturing an image including the animal, based on the second exposure value.

In an embodiment, the operation of identifying the movement of the animal included in the preview image may include an operation of estimating that the magnitude of the identified movement of the animal is less than the threshold value when a body part of the animal corresponds to at least one of a head, an ear, a torso, or a tail, and an operation of capturing an image including the animal, based on the second exposure value.

In an embodiment, the method may further include an operation of configuring a sharpness or color correction level of the camera 310 to be a first level when the magnitude of the identified movement is greater than the threshold value, and an operation of configuring the sharpness or color correction level of the camera 310 to be a second level lower than the first level when the magnitude of the identified movement is less than the threshold value.

In an embodiment, in a computer-readable recording medium storing programs in a computer, the programs may be executed by the computer to perform an operation of, while a preview image acquired using a camera is displayed on a display, identifying movement of an animal included in the preview image, an operation of, when the identified movement has a magnitude greater than a threshold value, acquiring, via the camera, an image captured based on a first exposure value, and an operation of, when the identified movement has a magnitude less than the threshold value, acquiring, via the camera, an image captured based on a second exposure value greater than the first exposure value.

The effects obtainable from the disclosure are not limited to the effects mentioned above, and other effects not mentioned above will be clearly understood by those skilled in the art to which the disclosure belongs.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

### Claims

1. An electronic device (300) comprising:

   a camera (310);
   a display (320);
   a processor (330); and
   a memory (340) configured to store instructions,
   wherein the processor (330) is configured to, when the instructions are executed, cause the electronic device (300) to:

   while a preview image acquired using the camera (310) is displayed on the display (320), identify movement of an animal included in the preview image;
   in case that the identified movement has a magnitude greater than a threshold value, acquire, via the camera, an image captured based on a first exposure value; and,
   in case that the identified movement has a magnitude less than the threshold value, acquire, via the camera, an image captured based on a second exposure value greater than the first exposure value.

2. The electronic device of claim 1, wherein the processor (330) is configured to, when the instructions are executed, cause the electronic device (300) to:

   while the preview image is displayed on the display (320), acquire first information for identifying a body part of the animal and second information for determining whether movement of the animal occurs; and
   based on the first information and the second information, identify the movement of the animal included in the preview image,.

3. The electronic device of claim 2, wherein the processor (330) is configured to, when the instructions are executed, cause the electronic device (300) to:

   divide the preview image into multiple regions;
   analyze a region, in which the animal is detected, among the multiple regions to identify a body part of the animal; and
   analyze pixel movement for each of the multiple regions to determine whether the movement of the animal occurs.

4. The electronic device of claim 2, wherein the processor (330) is configured to, when the instructions are executed, cause the electronic device (300) to:

   in case that the body part of the animal is determined to correspond to at least one of a forelimb and a hind limb, determine whether the movement of the animal occurs, based on the second information; and
   in case of determining that the movement of the animal occurs, calculate an estimated speed according to the movement of the animal.

5. The electronic device of claim 4, wherein the processor (330) is configured to, when the instructions are executed, cause the electronic device (300) to:

extract an optical flow from multiple frames acquired at a specified time interval while the preview image is provided;
based on the extracted optical flow, estimate pixel movement in the preview image; and
based on the estimated pixel movement, calculate the estimated speed.

6. The electronic device of claim 4, wherein the processor (330) is configured to, when the instructions are executed, cause the electronic device (300) to:

in case that the calculated estimated speed is equal to or greater than a reference speed, determine that the magnitude of the identified movement of the animal is greater than the threshold value; and
capture an image including the animal, based on the first exposure value.

7. The electronic device of claim 4, wherein the processor (330) is configured to, when the instructions are executed, cause the electronic device (300) to:

in case that the calculated estimated speed is less than the reference speed, determine that the magnitude of the identified movement of the animal is less than the threshold value; and
capture an image including the animal, based on the second exposure value.

8. The electronic device of claim 1, wherein the processor (330) is configured to, when the instructions are executed, cause the electronic device (300) to:

in case that the body part of the animal is determined to correspond to at least one of a head, an ear, a torso, or a tail, estimate the magnitude of the identified movement of the animal as being less than the threshold value; and
capture an image including the animal, based on the second exposure value.

9. A method of operating an electronic device (300), the method comprising:

while a preview image acquired using a camera (310) is displayed on a display (320), identifying movement of an animal included in the preview image;
in case that the identified movement has a magnitude greater than a threshold value, acquiring, via the camera (310), an image captured based on a first exposure value; and
in case that the identified movement has a magnitude less than the threshold value, acquiring, via the camera (310), an image captured based on a second exposure value greater than the first exposure value.

10. The method of claim 9, wherein the identifying of the movement of the animal included in the preview image comprises:

while the preview image is displayed on the display (320), acquiring first information for identifying a body part of the animal and second information for determining whether movement of the animal occurs; and
based on the first information and the second information, identifying the movement of the animal included in the preview image,.

11. The method of claim 10, wherein the identifying of the movement of the animal included in the preview image comprises:

in case that the body part of the animal is determined to correspond to at least one of a forelimb and a hind limb, determining whether the movement of the animal occurs, based on the second information; and
in case of determining that the movement of the animal occurs, calculating an estimated speed according to the movement of the animal.

12. The method of claim 11, wherein the calculating of the estimated speed according to the movement of the animal comprises:

extracting an optical flow from multiple frames acquired at a specified time interval while the preview image is provided;
based on the extracted optical flow, estimating pixel movement in the preview image,; and
based on the estimated pixel movement, calculating the estimated speed,

**13.** The method of claim 11, further comprising:

in case that the calculated estimated speed is greater than or equal to a reference speed, determining that the magnitude of the identified movement of the animal is greater than the threshold value; and
capturing an image comprising the animal, based on the first exposure value.

**14.** The method of claim 11, further comprising:

in case that the calculated estimated speed is less than the reference speed, determining that the magnitude of the identified movement of the animal is less than the threshold value; and
capturing an image comprising the animal, based on the second exposure value.

**15.** A computer-readable recording medium storing programs executable in a computer, wherein the programs are executed by the computer to perform the operations:

while a preview image acquired using a camera is displayed on a display, identifying movement of an animal included in the preview image;
in case that the identified movement has a magnitude greater than a threshold value, acquiring, via the camera, an image captured based on a first exposure value; and
in case that the identified movement has a magnitude less than the threshold value, acquiring, via the camera, an image captured based on a second exposure value greater than the first exposure value.

FIG.1

CAMERA MODULE (180)

FLASH (220)

IMAGE SENSOR (230)

LENS ASSEMBLY (210)

IMAGE STABILIZER (240)

IMAGE SIGNAL PROCESSOR (260)

MEMORY (250)

200

# FIG.2

FIG.3

(410)

(420)

411

421

+

(400)

431

FIG.4

FIG.5

FIG.6

START

710
IS OBJECT IDENTIFIED IN PREVIEW IMAGE? — NO

YES

720
DETECT BODY PART OF OBJECT

730
IS FORELIMB OR HIND LIMB DETECTED? — NO →

740
DETERMINE THAT HEAD, EAR, TORSO, OR TAIL HAS BEEN DETECTED

745
HAS MOVEMENT OCCURRED? — NO →

YES

YES

735
HAS MOVEMENT OCCURRED? — NO →

YES

750
CALCULATE SPEED OF OBJECT

760
SELECT SHOOTING PARAMETER

770
CAPTURE IMAGE BASED ON SELECTED SHOOTING PARAMETER

780
CAPTURE IMAGE BASED ON DEFAULT SHOOTING PARAMETER

END

FIG.7

START

IDENTIFY MOVEMENT OF ANIMAL
INCLUDED IN PREVIEW IMAGE ~810

ANIMAL'S
MOVEMENT > THRESHOLD
VALUE ⌐820

YES          NO

CONFIGURE FIRST
EXPOSURE VALUE ~830

CONFIGURE SECOND
EXPOSURE VALUE ~840

ACQUIRE IMAGE CAPTURED BASED ON
CONFIGURED EXPOSURE VALUE ~850

END

FIG.8

## INTERNATIONAL SEARCH REPORT

| International application No. |
| --- |
| **PCT/KR2024/011471** |

| A. | CLASSIFICATION OF SUBJECT MATTER |
| --- | --- |

**H04N 23/73**(2023.01)i; **H04N 23/61**(2023.01)i; **H04N 23/63**(2023.01)i; **H04N 23/84**(2023.01)i; **H04N 5/14**(2006.01)i

According to International Patent Classification (IPC) or to both national classification and IPC

| B. | FIELDS SEARCHED |
| --- | --- |

Minimum documentation searched (classification system followed by classification symbols)

H04N 23/73(2023.01); G03B 7/00(2006.01); G06N 3/0464(2023.01); H04N 23/00(2023.01); H04N 23/70(2023.01); H04N 23/743(2023.01); H04N 23/80(2023.01); H04N 25/60(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 객체(object), 프레임(frame), 영역(area), 움직임(motion), 임계값(threshold), 노출 (exposure), 설정(setting)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2023-0098575 A (QUALCOMM INCORPORATED) 04 July 2023 (2023-07-04) See claims 1 and 24-25. | 1,9,15 |
| Y | | 2-8,10-14 |
| Y | KR 10-0404088 B1 (LG ELECTRONICS INC.) 03 November 2003 (2003-11-03) See claims 1-2. | 2-8,10-14 |
| A | KR 10-2513818 B1 (NOVITEC CO., LTD.) 24 March 2023 (2023-03-24) See paragraphs [0012]-[0024]. | 1-15 |
| A | KR 10-2018-0090695 A (SAMSUNG ELECTRONICS CO., LTD.) 13 August 2018 (2018-08-13) See paragraphs [0006]-[0018]. | 1-15 |
| A | US 11671714 B1 (QUALCOMM INCORPORATED) 06 June 2023 (2023-06-06) See column 19, line 37 - column 22, line 9. | 1-15 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 November 2024** | **18 November 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011471**

| Patent document cited in search report | | | Publication date (day/month/year) | Patent family member(s) | | | Publication date (day/month/year) |
|---|---|---|---|---|---|---|---|
| KR | 10-2023-0098575 | A | 04 July 2023 | CN | 116438804 | A | 14 July 2023 |
| | | | | EP | 4238305 | A1 | 06 September 2023 |
| | | | | JP | 2023-548748 | A | 21 November 2023 |
| | | | | TW | 202220433 | A | 16 May 2022 |
| | | | | US | 2022-0138964 | A1 | 05 May 2022 |
| | | | | WO | 2022-093478 | A1 | 05 May 2022 |
| KR | 10-0404088 | B1 | 03 November 2003 | KR | 10-2003-0027440 | A | 07 April 2003 |
| KR | 10-2513818 | B1 | 24 March 2023 | | None | | |
| KR | 10-2018-0090695 | A | 13 August 2018 | KR | 10-2659504 | B1 | 23 April 2024 |
| | | | | US | 11102418 | B2 | 24 August 2021 |
| | | | | US | 2020-0252532 | A1 | 06 August 2020 |
| | | | | WO | 2018-143696 | A1 | 09 August 2018 |
| US | 11671714 | B1 | 06 June 2023 | CN | 118541986 | A | 23 August 2024 |
| | | | | KR | 10-2024-0144123 | A | 02 October 2024 |
| | | | | WO | 2023-140979 | A1 | 27 July 2023 |

Form PCT/ISA/210 (patent family annex) (July 2022)